# EUROPÄISCHE PATENTSCHRIFT

(11) **EP 1 319 537 B1**
(45) Veröffentlichungstag und Bekanntmachung des Hinweises auf die Patenterteilung: **15.03.2006**
(21) Anmeldenummer: 02025953.7
(22) Anmeldetag: 21.11.2002
(51) Int. Cl.: B60H 1/00

(54) **Heiz- oder Klimaanlage für ein Kraftfahrzeug**
Heating or air conditioning installation for motor vehicles
Installation de chauffage ou de climatisation pour véhicule à moteur

(30) Priorität: 15.12.2001 DE 10161751
(43) Veröffentlichungstag der Anmeldung: 18.06.2003
(73) Patentinhaber: Behr GmbH & Co. KG, 70469 Stuttgart (DE)
(72) Erfinder: Bendell, Ian, 71297 Mönsheim (DE); Dieksander, Wolfgang, 70794 Filderstadt (DE)
(74) Vertreter: Grauel, Andreas

(56) Entgegenhaltungen:
- DE-A- 10 001 629
- DE-A- 19 501 593
- PATENT ABSTRACTS OF JAPAN Bd. 1998, Nr. 06, 30. April 1998 (1998-04-30) -& JP 10 029419 A (MITSUBISHI HEAVY IND LTD), 3. Februar 1998 (1998-02-03)
- PATENT ABSTRACTS OF JAPAN Bd. 0082, Nr. 40 (M-336), 6. November 1984 (1984-11-06) -& JP 59 120513 A (NISSAN JIDOSHA KK), 12. Juli 1984 (1984-07-12)

## Beschreibung

Die Erfindung betrifft eine Heiz- oder Klimaanlage für ein Kraftfahrzeug mit einem luftdurchströmten Heizkörper in einem Gehäuse, mit mindestens einem dem Heizkörper nachgeschalteten Mischraum und mit mindestens einer zur Steuerung mindestens eines Luftstromes dienenden Schwenkklappe, die mit mindestens einer senkrecht zu ihrer Schwenkachse stehenden Seitenwand mit einer Öffnung versehen ist, die bei der Verschwenkung mit einer in einer Seitenwand des Gehäuses angeordneten Öffnung zur Deckung gebracht werden kann, die zu einem Defrosterauslaß führt.

Eine Heiz- oder Klimaanlage dieser Art ist aus der DE 100 01 629 A1 bekannt. Die Klappe die dort etwa halbzylindrisch ausgebildet ist, besitzt eine Öffnung in ihrem Zylindermantelteil, die mit einem zu einem Defrosterauslaß führenden Strömungskanal bei der Verschwenkung der Klappe zur Deckung gebracht werden kann. Diese halbzylindrisch ausgebildete Schwenkklappe sitzt mit ihrem offenen Teil direkt angrenzend an einen Mischraum, dem Luft von einem Bereich hinter dem Heizkörper und kühle Luft unmittelbar zugeführt werden kann. Die Seitenwände der halbzylindrischen Klappe sind ebenfalls mit Öffnungen versehen, welche zu seitlichen Luftführungskanälen führen. Eine solche Anordnung lässt nur die Weiterleitung der im Mischraum temperierten Luft zu. Eine Änderung der Temperatur der beispielsweise aus dem Defrosterauslässen ausströmenden Luft gegenüber jener, die zu den anderen Auslassdüsen geleitet wird, ist nicht möglich.

Der vorliegenden Erfindung liegt die Aufgabe zugrunde, eine Heiz- oder Klimaanlage der eingangs genannten Art so auszubilden, dass auch die Temperatur der aus dem Defrosterauslaß oder aus den Defrosterauslässen ausströmenden Luft individuell abstimmbar ist.

Zur Lösung dieser Aufgabe wird vorgesehen, dass der Defrosterauslaß im oberen Bereich mindestens einer Strömungskammer vorgesehen ist, die mit dem Mischraum in Verbindung steht und dass ein Kaltluftkanal vorgesehen ist, der an die Strömungskammer angrenzt und in seiner an die Strömungskammer angrenzenden Seitenwand die von der Schwenkklappe zu öffnende oder zu schließende Öffnung aufweist.

Durch diese Ausgestaltung kann wahlweise dem oder den Defrosterauslässen mehr oder weniger Kaltluft zugeführt werden, so dass die Defrosterdüsen auch zur Fahrzeuginnenraumbelüftung dienen können und auch eine auf die Außentemperaturen abgestimmte Beaufschlagung der Scheibeninnenseite möglich wird.

In Ausgestaltung der Erfindung kann der Kaltluftkanal ein parallel oberhalb des Heizkörpers verlaufender Kanal mit etwa der Breite des Heizkörpers sein und der Kaltluftkanal kann über einem weiteren oberhalb des Heizkörpers verlaufenden und zu einem ersten Mischraum führenden Kaltluftkanal liegen, wobei von diesem ersten Mischraum aus die Versorgung der Belüftungsdüsen erfolgt.

In Weiterbildung der Erfindung kann ein weiterer unterhalb des Heizkörpers verlaufenden zu einem zweiten Mischraum führender Kaltluftkanal vorgesehen sein und es kann dieser zweite Mischraum über seitliche Öffnungen mit beidseitig des Heizkörpers verlaufenden Strömungskammern verbunden sein, die beide in Anschlussstutzen für einen Defrosterauslaß enden. Diese Ausgestaltung, bei der vom zweiten Mischraum aus beispielsweise auch der Fußraum des Fahrgastinnenraumes temperiert werden kann, stellt somit auch die temperierte Luft zur Verfügung, die zum Defrosterauslaß strömt. Ihre Temperatur lässt sich durch Betätigung der als Defrosterklappe dienenden Schwenkklappe erniedrigen, wenn das gewünscht ist, wobei dadurch die Temperaturverhältnisse im übrigen Fahrgastraum nicht beeinflusst werden.

Die Schwenkklappe selbst kann mit beidseitig von der Schwenkachse abstehenden Flügeln versehen sein, die unter einem stumpfen Winkel zueinander geneigt sind. Die Durchtrittsöffnung in der Seitenwand der Schwenkklappe wird dabei zweckmäßig angrenzend an einen Flügel vorgesehen und in ihrer Lage auf die Lage des Flügels abgestimmt, und zwar so, dass die Öffnung nur in Zwischenstellungen der Schwenkklappe ganz oder teilweise geöffnet ist und in den beiden Endstellungen dagegen, in denen die Verbindung zwischen Strömungskammer und Defrosterauslaß entweder voll geöffnet oder voll geschlossen ist, von der Seitenwand völlig abgedeckt wird. In ähnlicher Weise kann erwärmte Luft zu den Fußraumdüsen gesteuert geleitet werden.

Weitere Merkmale und Vorteile der Erfindung ergeben sich aus den Unteransprüchen sowie aus der nachfolgenden Beschreibung eines Ausführungsbeispieles, das in der Zeichnung dargestellt ist. Es zeigen:
- Fig. 1: einen schematischen Längsschnitt durch das Gehäuse einer erfindungsgemäßen Heiz- oder Klimaanlage für ein Kraftfahrzeug,
- Fig. 2: die Hälfte eines Querschnittes durch die Heiz- oder Klimaanlage der Fig. 1 in Richtung der Schnittlinie II-II,
- Fig. 3: eine vergrößerte Darstellung eines Teiles des Längsschnittes nach Fig. 1 und
- Fig. 4: eine perspektivische Darstellung einer in der Heiz- oder Klimaanlage nach Fig. 1 und 3 vorgesehenen Schwenkklappe.

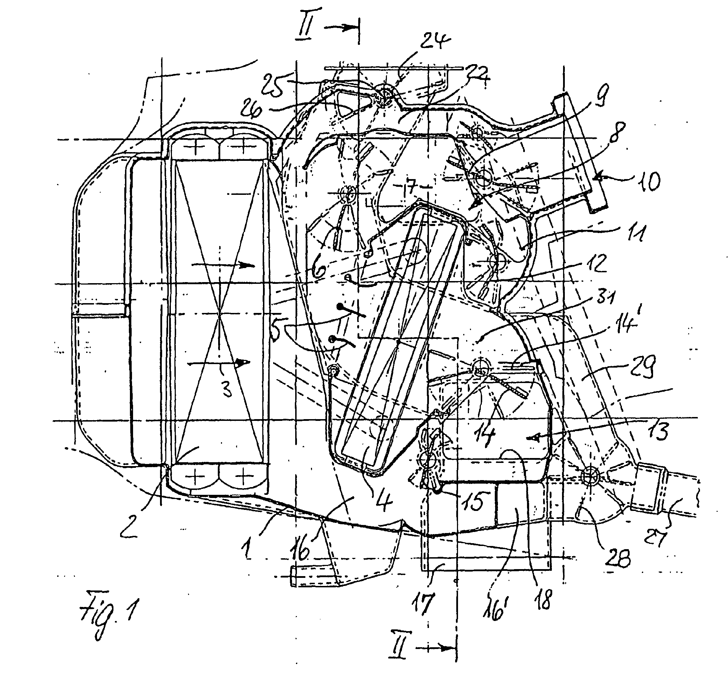

Die Fig. 1 zeigt schematisch das Gehäuse 1 einer Kraftfahrzeug-Heiz- oder Klimaanlage, in dem ein Verdampfer 2 angeordnet ist, durch den ein in nicht näher gezeigter Weise erzeugter Luftstrom in Richtung der Pfeile 3 durchtritt und im nachfolgenden Gehäusebereich temperiert und verteilt wird. Im Gehäuse 1 ist in Strömungsrichtung hinter dem Verdampfer 2 ein Heizkörper 4 vorgesehen, der leicht gekippt hinter dem Verdampfer 2 angeordnet ist und in seinem Einlaufbereich mit Leitschaufeln 5 versehen ist, die für eine gleichmäßige Verteilung der eintretenden kalten Luft auf den Querschnitt des Heizkörpers 4 sorgen sollen. Oberhalb des Heizkörpers 4 ist ein von einer als Kaltluftklappe dienenden Schwenkklappe 6 freigebbarer Kaltluftkanal 7 angeordnet, der den Heizkörper 4 übergreift und zu einem oberen Mischraum 8 führt, in dem eine Belüftungs-Klappe 9 einem Austrittsstutzen 10 für die Mittenbelüftung im Fahrzeug vorgelagert ist. In den Mischraum 8 mündet auch ein Warmluft-Verbindungskanal 11, in dem eine ihn mehr oder weniger freigebende, als Warmluftklappe dienende Schwenkklappe 12 angeordnet ist.

Hinter dem Heizkörper 4 liegt im unteren Bereich des Gehäuses 1 außerdem ein weiterer, nämlich ein unterer Mischraum 13. In dessen Zuführquerschnitt, der von einer Warmluftkammer 31 ausgeht, sitzt ebenfalls eine als Warmluftklappe dienende Schwenkklappe 14, die, wie in der Stellung 14' dargestellt ist, den gesamten Eintrittsquerschnitt zum Mischraum 13 abschließen kann. Vor dem Mischraum 13 ist außerdern eine Kaltluftklappe 15 vorgesehen, über die Kaltluft aus dem Kaltluftkanal 16 gesteuert zum Mischraum geführt werden kann. Die Schwenkklappe 14 lässt sich aber auch in Verbindung mit der Kaltluftklappe 15, wie im übrigen auch die Steuerklappen 6 und 12, in Stellungen versetzen, in denen sie als Leitschaufeln für die ungehinderte Zufuhr von Luft in den nachgeordneten Raum sorgen können.

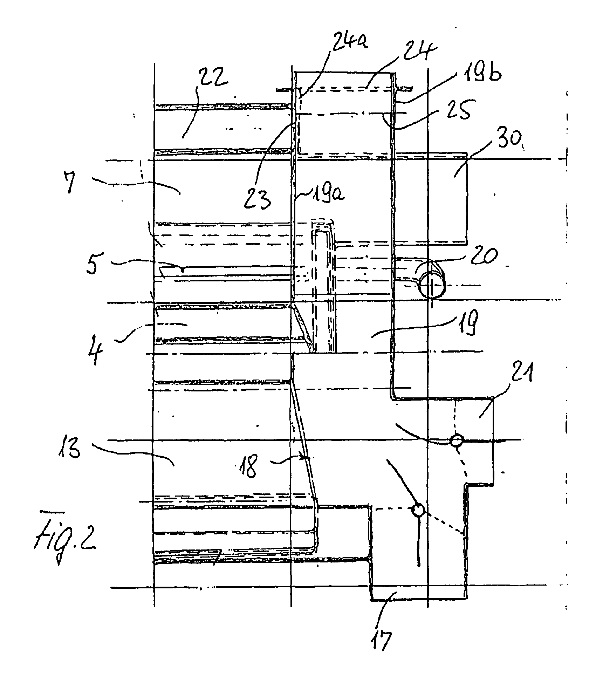

Es ist ohne weiteres erkennbar, dass durch jeweilige Einstellung der erwähnten Klappen und der Klappen 6 und 15 eine Temperaturbeeinflussung im Mischraum 8 bzw. 13 möglich ist. Es ist auch erkennbar, dass der Strömungsquerschnitt des Kaltluftkanals 7 größer ist als jener des Kaltluftkanals 16, so dass auf diese Weise auch problemlos eine größere Menge Kaltluft zum oberen Mischraum 8 und von dort zu den Belüftungsdüsen 10 oder, was noch erläutert werden wird, zu Seitendüsen abgeführt werden kann. Es ist auch zu erkennen, dass der Strömungsquerschnitt der Warmluftkammer 31 größer ist als jener des Warmluftkanals 11, so dass auf diese Weise auch problemlos eine größere Menge Warmluft zum unteren Mischraum 13 und von dort zu den Fuß- bzw. Defrosterdüsen gelangen kann. Im unteren Mischraum 13 wird sich daher bei entsprechender Einstellung der Klappe 14 und der Klappe 15 in der Regel eine etwas höhere Temperatur als im Mischraum 8 einstellen. Die Ausströmung der Luft in den Fußraum, zu den Defrosterdüsen und zu dem Fondfußraum, die durch den insbesondere aus Fig. 2 erkennbaren Verbindungsstutzen 17 zum Fußraum und durch die seitliche Öffnung 18 und durch seitlich vom Heizkörper 4 angeordnete Strömungskammern 19 hindurch zum Frontfußraum erfolgt, wird daher stets mit einer höheren und damit angenehmeren Temperatur für die Fahrzeuginsassen erfolgen können. Auch eine effektivere Defrostung wird ermöglicht.

Die Fig. 2 zeigt eine der beiden seitlich vom Heizkörper 4 angeordneten Strömungskammern 19, die über die seitliche Öffnung 18 mit dem unteren Mischraum 13 in Verbindung steht. Erkennbar sind auch Zuführleitungen 20 für den Heizkörper 4 der oben vom Kaltluftkanal 7 überdeckt wird, der aber von der Strömungskammer 19 durch die Trennwand 19a abgegrenzt ist. Erkennbar ist hier der Verbindungsstutzen 17 zum Fondfußraum, aber auch ein seitlich abgehender Stutzen 21, der von der Strömungskammer 19 aus zum Frontfußraum führt. Die in dem Mischraum 13 erreichte Temperatur des Luftstromes steht daher weitgehend auch in der Strömungskammer 19 zur Verfügung.

Die Fig. 1 und 2 lassen aber auch erkennen, dass der obere erste Kaltluftkanal 7 von einem zusätzlichen Kaltluftkanal 22 überdeckt ist, welcher mit einer seitlichen Öffnung 23 in den oberen Teil der Strömungskammer 19 mündet, die gleichzeitig den Anschlussstutzen zu den nicht gezeigten Defrosterdüsen bildet, wo im Bereich der Öffnung 23 eine um die Achse 25 schwenkbare Klappe 24 vorgesehen ist, die in einer senkrecht zu ihr stehenden Seitenwand 24a die aus Fig. 1 erkennbare Öffnung 26 besitzt, die in einer bestimmten Schwenklage der Klappe 24 zur Deckung mit der Öffnung 23 gebracht werden kann. Der in der Strömungskammer 19 vom Mischraum 13 aus nach oben geförderten Warmluft kann auf diese Weise Kaltluft zugemischt werden, so dass auch die Temperatur des aus den Defrosterdüsen austretenden Luftstromes individuell einstellbar ist.

Vom unteren Bereich 16' des Kaltluftkanals 16 aus kann schließlich ein Kanal 27 zur Belüftung des Fondraumes abgeführt werden, der ebenfalls mit einer Steuerklappe 28 ausgerüstet und mit einem Kanal 29 an die Warmluftkammer 31 angeschlossen ist, so dass auch die Temperatur der Belüftungsluft im Fondraum regelbar ist.

Wie Fig. 2 zeigt, besteht vom Kaltluftkanal 7 aus eine seitliche Verbindung zu jeweils einem abstehenden Anschlussstutzen 30, der zu nicht gezeigten Seitendüsen im Bereich der Seitenfenster führt. Zu diesen Seitendüsen wird daher Luft geliefert, welche die im Mischraum 8 erzielte Temperatur aufweist. Diese Temperatur entspricht auch jener des Luftstromes, der durch den Austrittsstutzen 10 für die Mittenbelüftung 10 austritt.

Es ist erkennbar, dass durch die erfindungsgemäße Ausgestaltung eine Fülle von Regelmöglichkeiten durch eine Vielzahl von Steuerklappen erreichbar ist. Es kann auf diese Weise ausgehend von den beiden Strömungskammern 19 auf der rechten oder linken Seite des Gehäuses 1 die Temperatur rechts oder links individuell gesteuert werden. Dazu kommt, dass eine unterschiedliche Temperatursteuerung jeweils oben und unten möglich ist, so dass, wenn Front- und Fondraum zusammen mit der Anordnung von Seitendüsen betrachtet werden, bis zu acht unterschiedliche Klimazonen individuell eingestellt werden können. Der Gesamtaufbau in der Anlage bleibt aber relativ einfach.

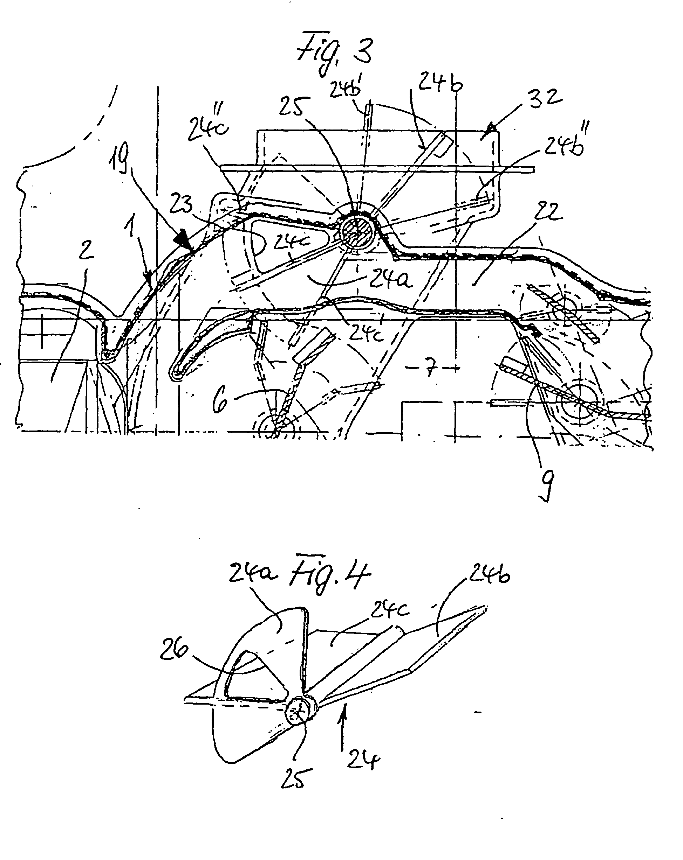

Die Fig. 1 und 3 lassen aber auch erkennen, dass der obere erste Kaltluftkanal 7 von einem zusätzlichen Kaltluftkanal 22 überdeckt ist, welcher mit einer seitlichen Öffnung 23 in den oberen Teil der Strömungskammer 19 mündet, die gleichzeitig den Anschlussstutzen 19b zu den nicht gezeigten Defrosterdüsen bildet, wo im Bereich der Öffnung 23 eine um die Achse 25 schwenkbare Klappe 24 vorgesehen ist, die in einer senkrecht zu ihr stehenden Seitenwand 24a die aus Fig. 1 erkennbare Öffnung 26 besitzt, die in einer bestimmten Schwenklage der Klappe 24 zur Deckung mit der Öffnung 23 gebracht werden kann. Die in der Strömungskammer 19 vom Mischraum 13 aus nach oben geförderte Warmluft kann auf diese Weise Kaltluft zugemischt werden, so dass auch die Temperatur des aus den Defrosterdüsen austretenden Luftstromes individuell einstellbar ist.

Die Fig. 3 und 4 verdeutlichen, dass die Schwenkklappe 24 selbst aus zwei von der Schwenkachse 25 abstehenden Flügeln 24b und 24c besteht, die unter einem stumpfen Winkel zueinander geneigt sind. Auf einer Seite des Flügels 24c grenzt die vorher schon erwähnte Seitenwand 24a an, die senkrecht zur Schwenkachse 25 steht. In dieser Seitenwand 24a befindet sich eine in etwa dreieckförmige Öffnung 26, deren Form und Abmessung der Öffnung 23 in der Wand 19a zwischen der Strömungskammer 19 und dem Kaltluftkanal 22 entspricht.

Wie Fig. 3 zeigt, kann die als Defrosterklappe dienende Schwenkklappe 24 zwischen einer ersten Endstellung, in der ihr Flügel 24b die Stellung 24b" einnimmt und an einem Anschlag anliegt, bis in eine zweite Endstellung um einen Winkel von weniger als 90° verschwenkt werden, in der dieser Flügel die Stellung 24b' einnimmt. In der ersten Endstellung schließen beide Flügel den Zustrom von Luft aus der Strömungskammer 19, deren Konturen in Fig. 3 gestrichelt angedeutet sind, vollständig ab. Auch die Öffnung 23 in der Seitenwand 19a bleibt verschlossen, weil sich die Öffnung 26, in dieser Klappenstellung in einer Lage befindet, in der sie die Öffnung 23 nicht überdeckt.

In der zweiten Endstellung der Schwenkklappe 24, in der also die beiden Flügel der Klappe die Stellung 24c' und 24b' einnehmen, ist die Zuströmung zum Defrosterauslaß bzw. zu dem für den Defrosterauslaß vorgesehenen Anschlussstutzen 32 vollkommen geöffnet. Die Öffnung 23 in der Seitenwand 19a allerdings ist auch in dieser Lage verschlossen. Dies bedeutet, dass in dieser Stellung die aus dem Mischraum 13 kommende entsprechend warm gehaltene Luft ungehindert zu den Defrosterdüsen gelangt, und zwar ohne dass noch Kaltluft zugemischt wird.

In der zwischen diesen beiden Endstellungen liegenden Zwischenstellung der Klappe 24 liegen die Flügel 24b und 24c so, dass ebenfalls noch ein Warmluftstrom zum Anschlussstutzen 32 aus den Strömungskammern 19 gelangen kann. In dieser Stellung allerdings deckt sich die Öffnung 26 vollständig mit der Öffnung 23 in der Seitenwand 19a, so dass Kaltluft aus dem Kanal 22 zum Anschlussstutzen 33 und damit auch zu den Defrosterdüsen gelangen kann. Die Temperatur der an diesen Defrosterdüsen ausströmenden Luft wird dadurch verringert. Wird die Schwenkklappe 24 aus dieser Zwischenstellung im Uhrzeiger- oder im Gegenuhrzeigersinn verschwenkt, dann wird der freie Durchtrittsquerschnitt der Öffnung 23 jeweils verringert, so dass eine gewünschte Temperierung des aus den Defrosterdüsen austretenden Luftstromes möglich wird.

Durch die Erfindung wird daher eine Anpassung der Austrittstemperatur an den Defrosterdüsen individuell ermöglicht, ohne dass die Klimatisierung oder Beheizung des übrigen Fahrgastraumes dadurch nachteilig beeinflusst wird.

## Patentansprüche

1. Heiz- oder Klimaanlage für ein Kraftfahrzeug mit einem luftdurchströmten Heizkörper (4) in einem Gehäuse (1), mit mindestens einem dem Heizkörper nachgeschalteten Mischraum (13), und mit mindestens einer zur Steuerung mindestens eines Luftstromes dienenden Schwenkklappe, die mit mindestens einer senkrecht zu ihrer Schwenkachse stehenden Seitenwand (24a) mit einer Öffnung (26) versehen ist, die bei der Verschwenkung mit einer in einer Seitenwand des Gehäuses angeordneten Öffnung zur Deckung gebracht werden kann, die zu einem Defrosterauslaß führt **dadurch gekennzeichnet, dass** der Defrosterauslaß im in Einbaulage oberen Bereich mindestens einer Strömungskammer (19) vorgesehen ist, die mit dem Mischraum (13) in Verbindung steht, und dass ein Kaltluftkanal (22) vorgesehen ist, der an die Strömungskammer angrenzt und in seiner an die Strömungskammer angrenzenden Seitenwand (19a) die von der Schwenkklappe (24) zu öffnende oder zu schließende Öffnung (23) aufweist.

2. Heiz- oder Klimaanlage nach Anspruch 1, **dadurch gekennzeichnet, dass** der erste Kaltluftkanal (22) ein parallel oberhalb des Heizkörpers (4) verlaufender Kanal mit etwa der Breite des Heizkörpers (4) ist.

3. Heiz- oder Klimaanlage nach Anspruch 2, **dadurch gekennzeichnet, dass** der Kaltluftkanal (22) über einen weiteren, oberhalb des Heizkörpers (4) verlaufenden und zu einem ersten Mischraum (8) führenden Kaltluftkanal (7) liegt.

4. Heiz- oder Klimaanlage nach Anspruch 3, **dadurch gekennzeichnet, dass** ein weiterer unterhalb des Heizkörpers (4) verlaufender, zu einem zweiten Mischraum (13) führender Kaltluftkanal (16) vorgesehen ist.

5. Heiz- oder Klimaanlage nach Anspruch 4, **dadurch gekennzeichnet, dass** der zweite Mischraum (13) über seitliche Öffnungen (18) mit beidseitig des Heizkörpers verlaufenden Strömungskammern (19) verbunden ist, die beide im Bereich ihres vom Mischraum (13) abgewandten Endes in Anschlussstutzen (32) für einen Defrosterauslaß enden.

6. Heiz- oder Klimaanlage nach Anspruch 1, **dadurch gekennzeichnet, dass** die Schwenkklappe (24) mit beidseitig von der Schwenkachse (25) abstehenden Flügeln (24c, 24b) versehen ist, die unter einem stumpfen Winkel zueinander geneigt sind.

7. Heiz- oder Klimaanlage nach Anspruch 6, **dadurch gekennzeichnet, dass** die Öffnung (26) in der Seitenwand (24a) der Schwenkklappe (24) angrenzend an einen Flügel (24c) vorgesehen ist.

8. Heiz- oder Klimaanlage nach Anspruch 7, **dadurch gekennzeichnet, dass** die Öffnung (26) in ihrer Lage auf die Lage des Flügels (24c) so abgestimmt ist, dass die Öffnung (23) nur in Zwischenstellungen der Schwenkklappe (24) ganz oder teilweise geöffnet ist, in den beiden Endstellungen (24c', 24c") dagegen, in denen die Verbindung zwischen Strömungskammer (19) und Defrosterauslaß (19b) entweder voll geöffnet oder geschlossen ist, von der Seitenwand (24a) völlig abgedeckt ist.

## Claims

1. Heating of air conditioning system for a motor vehicle, with a heater (4) in a housing (1), through which air flows, with a blend chamber (13) located downstream of the heater, and with at least one swivel damper provided for the control of at least one airflow, which incorporates at least one side wall (24a) extending at right angles to its pivot axis and featuring an opening (26), which, when being pivoted, can be brought into alignment with an opening located in a side wall of the housing and leading to a defroster outlet, **characterised in that** the defroster outlet is, in its installed position, provided in the upper area with at least one flow chamber (19) connected to the blend chamber (13), and **in that** a cold air duct (22) is provided, which adjoins the flow chamber and features in its side wall (19a) adjoining the flow chamber the opening (23) to be opened or closed by the swivel damper (24).

2. Heating or air conditioning system according to claim 1, **characterised in that** the first cold air duct (22) is a duct running above and parallel to the heater (4), its width corresponding approximately to that of the heater (4).

3. Heating or air conditioning system according to claim 2, **characterised in that** the cold air duct (22) lies above a further cold air duct (7) running above the heater (4) and leading to a first blend chamber (8).

4. Heating or air conditioning system according to claim 3, **characterised in that** a further cold air duct (16) running below the heater (4) and leading to a second blend chamber (13) is provided.

5. Heating or air conditioning system according to claim 4, **characterised in that** the second blend chamber (13) is, via lateral openings, connected to flow chambers (19) extending on both sides of the heater and terminating in a connection (32) for a defroster outlet in the area of the ends remote from the blend chamber (13).

6. Heating or air conditioning system according to claim 1, **characterised in that** the swivel damper (24) is provided with blades (24c, 24b) projecting on both sides from the pivot axis (25) and together enclosing an obtuse angle.

7. Heating or air conditioning system according to claim 6, **characterised in that** the opening (26) in the side wall (24a) of the swivel damper (24) adjoins a blade (24c).

8. Heating or air conditioning system according to claim 7, **characterised in that** the position of the opening (26) is so matched to the position of the blade (24c) that the opening (23) is fully or partially open only in intermediate positions of the swivel damper (24) while being fully covered by the side wall (24a) in the two end positions (24c', 24c") in which the connection between the flow chamber (19) and the defroster outlet (19b) is either fully open or closed.

## Revendications

1. Installation de chauffage ou de climatisation pour un véhicule automobile, comprenant un corps de chauffage (4) traversé par un écoulement d'air dans un carter (1), comprenant également au moins une chambre de mélange (13) placée à la suite du corps de chauffage, et comprenant au moins un volet pivotant servant à commander au moins un écoulement d'air, ce volet pivotant étant pourvu d'au moins une paroi latérale (24a) orientée perpendiculairement à son axe de pivotement et présentant une ouverture (26) qui, lors du pivotement, peut être amenée en recouvrement avec une ouverture disposée dans une paroi latérale du carter et conduisant à une sortie de dégivrage, **caractérisée en ce que** la sortie de dégivrage est prévue dans la zone supérieure, en position d'implantation, d'au moins une chambre d'écoulement (19), qui est en communication avec la chambre de mélange (13), et **en ce qu'**il est prévu un canal d'air froid (22) qui est contigu à la chambre d'écoulement et présente, dans sa paroi latérale (19a) contiguë à la chambre d'écoulement, l'ouverture (23) à ouvrir ou à fermer par le volet pivotant (24).

2. Installation de chauffage ou de climatisation selon la revendication 1, **caractérisée en ce que** le premier canal d'air froid (22) est un canal s'étendant parallèlement au-dessus du corps de chauffage (4), et présentant environ la largeur du corps de chauffage (4).

3. Installation de chauffage ou de climatisation selon la revendication 2, **caractérisée en ce que** le canal d'air froid (22) se situe au-dessus d'un autre canal d'air froid (7) s'étendant au-dessus du corps de chauffage (4) et menant à une première chambre de mélange (8).

4. Installation de chauffage ou de climatisation selon la revendication 3, **caractérisée en ce qu'**il est prévu encore un autre canal d'air froid (16) s'étendant en-dessous du corps de chauffage (4) et menant à une seconde chambre de mélange (13).

5. Installation de chauffage ou de climatisation selon la revendication 4, **caractérisée en ce que** la seconde chambre de mélange (13) est reliée, par l'intermédiaire d'ouvertures latérales (18), à des chambres d'écoulement (19), qui s'étendent de part est d'autre du corps de chauffage et débouchent toutes les deux, dans la zone de leur extrémité éloignée de la chambre de mélange (13), dans des embouts de raccordement (32) pour une sortie de dégivrage.

6. Installation de chauffage ou de climatisation selon la revendication 1, **caractérisée en ce que** le volet pivotant (24) est pourvu d'ailettes (24c, 24b) en porte-à-faux de part et d'autre de l'axe de pivotement (25) et étant inclinées l'une par rapport à l'autre selon un angle obtus.

7. Installation de chauffage ou de climatisation selon la revendication 6, **caractérisée en ce que** l'ouverture (26) dans la paroi latérale (24a) du volet pivotant (24) est prévue contiguë à une ailette (24c).

8. Installation de chauffage ou de climatisation selon la revendication 7, **caractérisée en ce que** l'ouverture (26) est adaptée, quant à sa position, à la position de l'ailette (24c) de façon telle, que l'ouverture (23) ne soit ouverte entièrement ou partiellement que dans des positions intermédiaires du volet pivotant (24), mais soit au contraire entièrement recouverte par la paroi latérale (24a), dans les deux positions extrêmes (24c', 24c") dans lesquelles la liaison de communication entre la chambre d'écoulement (19) et la sortie de dégivrage (19b) est soit entièrement ouverte, soit fermée.
